# DEMANDE DE BREVET EUROPEEN

(11) **EP 1 036 756 A1**
(43) Date de publication de la demande: **20.09.2000**
(21) Numéro de dépôt: 00400225.9
(22) Date de dépôt: 28.01.2000
(51) Int. Cl.: C01B 3/26

(54) **Procédé et dispositif de production d'hydrogène par decomposition thermocatalytique d'hydrocarbures**

(30) Priorité: 10.03.1999 FR 9902948
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Cantacuzene, Serban, 91300 Massy (FR)
(74) Mandataire: Mellul-Bendelac, Sylvie Lisette

(57) **Abrégé**

La présente invention concerne un procédé et une installation d'élaboration d'un mélange gazeux de production comportant de l'hydrogène, par décomposition thermocatalytique d'un mélange initial qui comporte au moins un hydrocarbure, sur un catalyseur étant apte, au contact de l'hydrocarbure, à former des nanotubes de carbone, le procédé étant remarquable en ce que l'on met en oeuvre une succession d'au moins deux zones réactionnelles catalytiques, séparées au sein d'au moins deux réacteurs différents consécutifs, ou bien consécutives au sein d'un même réacteur, les zones réactionnelles catalytiques consécutives étant soumises à un gradient de température croissant, et/ou présentent un gradient croissant de teneur en métal dans le catalyseur.

## Description

La présente invention concerne le domaine de la production d'hydrogène par la décomposition (craquage) thermocatalytique d'hydrocarbures.

On sait que le domaine de la production d'hydrogène, en particulier sur-site, est d'une grande actualité, notamment du fait d'une demande croissante du marché industriel en hydrogène, par exemple pour des applications en traitement thermique.

De nombreux travaux ont été publiés ces dernières années sur ce sujet, en particulier sur des travaux utilisant des catalyseurs constitués de poudre de nickel supporté sur silice SiO₂.

On se reportera alors notamment aux documents suivants :
- l'article de Zhang et al. paru dans "Applied Catalysis A", 1998, vol. 167, pages 161 à 172 ;
- l'article de Muradov paru dans "Energy and Fuels", 1998, vol. 12, pages 41 à 48 ;
- l'article de Chen et al paru dans la revue "Carbon", 1997, vol. 35, pages 1495 à 1501 ;
- l'article de Poirier et al paru dans "International Journal of Hydrogen Energy", 1997, vol. 22, pages 429 à 433 ; ou encore
- l'article de Steinberg paru dans "International Journal of Hydrogen Energy", 1998, vol. 23, pages 419 à 425.

Le mécanisme de production d'hydrogène dans de telles conditions, qui est le plus couramment admis dans la littérature, apparaît être alors l'adsorption de la molécule d'hydrocarbure sur la surface d'une particule de catalyseur (par exemple une particule de nickel supportée sur silice poreuse), suivie de la déshydrogénation successive de l'hydrocarbure (par exemple passant de CH₄ à CH₃, puis CH₂, puis CH), pour aboutir à un atome de carbone adsorbé sur la surface du catalyseur. Par diffusion thermique, ce carbone transite alors à travers la particule de catalyseur pour former ce que l'on appelle des « nanotubes » ou « nanofilaments » de carbone, phénomène permettant au catalyseur d'être actif durant un temps beaucoup plus long (la surface métallique reste plus longtemps libre, accessible, active).

On sait que le phénomène de formation de nanotubes est notamment liée à la taille des particules de catalyseur, à la teneur en métal du catalyseur, à la porosité du matériau servant de support au métal.

On peut donc résumer rapidement cette littérature par le fait qu'elle a démontré la faisabilité de la réaction de craquage sur de tels catalyseurs et l'activation de la réaction entre environ 550 et 800°C, le fait que le maintien de l'activité du catalyseur est essentiellement liée à la formation de ces nanofilaments de carbone, et précisément la désactivation de cette réaction par manque d'espace pour la croissance de ces filaments, conduisant alors à la nécessité d'effectuer une régénération du catalyseur, par exemple par balayage à l'air.

Ainsi, si toute cette littérature présente le craquage catalytique direct d'hydrocarbures comme une voie très prometteuse à explorer en vue de produire de l'hydrogène (notamment sur site), des développements restent indiscutablement à effectuer pour proposer un procédé qui soit réellement industriel sur la base de ce concept, notamment en considérant le fait que l'art antérieur a obtenu tous ces résultats de faisabilité sur de faibles débits de gaz et de faibles quantités de catalyseurs (typiquement quelques millilitres).

Les travaux menés à bien par la Demanderesse ont également démontré que certaines questions techniques clés restent véritablement en suspend :
- le problème du dépôt de carbone consécutif au craquage : se produisant immédiatement au début du craquage, et entraînant un risque de bouchage important du réacteur (on n'utilise alors que la première portion du catalyseur) ;
- les difficultés rencontrées lors de la régénération du catalyseur : régénération qui est source de CO et CO₂, donc de dépôt de suie ;
- la régénération est par ailleurs un processus exothermique : l'accroissement de température et ainsi le cyclage thermique en résultant peut remettre en cause la tenue des matériaux ;
- il est nécessaire, notamment pour espérer atteindre des conditions réellement industrielles, d'obtenir des temps de régénération courts.

Un des objectifs de la présente invention est alors de proposer une réponse aux questions techniques précédemment évoquées.

Le procédé selon l'invention, d'élaboration d'un mélange gazeux de production comportant de l'hydrogène, par décomposition thermocatalytique d'un mélange initial qui comporte un hydrocarbure ou un mélange d'hydrocarbures, la décomposition étant effectuée sur un catalyseur étant apte, au contact de l'hydrocarbure, à former des nanotubes de carbone, se caractérise alors en ce que :
- on dispose d'au moins une succession qui comporte au moins une première et une seconde zones réactionnelles catalytiques, séparées au sein d'au moins deux réacteurs différents consécutifs, ou bien consécutives au sein d'un même réacteur ;
- lesdites au moins une première et une seconde zones réactionnelles catalytiques consécutives, sont soumises à un gradient de température croissant et/ou présentent un gradient croissant de teneur en métal dans le catalyseur ;
- on fait arriver le mélange initial dans ladite première zone réactionnelle catalytique de la succession, afin d'y former par décomposition thermocatalytique un premier mélange intermédiaire, que l'on dirige vers ladite seconde zone réactionnelle catalytique de la succession, pour former ledit mélange de production requis.

Comme on l'aura compris à la lecture de ce qui précède, la notion selon l'invention de « première zone » et « seconde zone » de la succession doit être comprise en considérant le sens de circulation du gaz à craquer dans la succession.

Le procédé selon l'invention pourra également adopter l'une ou plusieurs des caractéristiques techniques suivantes :
- la succession comprend au moins deux zones réactionnelles catalytiques, chaque zone étant située dans un réacteur séparé ;
- la succession comprend au moins deux zones réactionnelles catalytiques, positionnées de façon consécutive dans un même réacteur ;
- on procède, postérieurement à une phase d'élaboration dudit mélange de production, à une phase de régénération des zones réactionnelles catalytiques de la succession, de la façon suivante : on dispose de moyens permettant de balayer indépendamment et simultanément à l'aide d'un gaz de régénération (par exemple un gaz oxydant) chacune des zones réactionnelles catalytiques de la succession ;
- on procède, postérieurement à une phase d'élaboration dudit mélange de production, à une phase de régénération des zones réactionnelles catalytiques de la succession, de la façon suivante : on dispose de moyens permettant de balayer indépendamment et simultanément à l'aide d'un gaz de régénération oxydant chacune des zones réactionnelles catalytiques de la succession, le gaz de régénération utilisé étant différent d'une zone à l'autre par le fait qu'il possède une teneur résiduelle en oxygène différente ;
- on procède, postérieurement à une phase d'élaboration dudit mélange de production, à une régénération des zones réactionnelles catalytiques de la succession, en balayant à l'aide d'un gaz de régénération indépendamment et simultanément chacune des zones réactionnelles catalytiques, chacune des zones réactionnelles qui suivent la première zone de la succession étant régénérée de la façon suivante : on dispose, pour chacune desdites zones réactionnelles catalytiques qui suivent la première zone de la succession, d'une conduite d'amenée d'un gaz de régénération, chacune des conduites d'amenée se raccordant à la canalisation utilisée pour diriger vers la zone considérée à régénérer le mélange intermédiaire produit par la zone la précédant dans la succession (on définira la « première zone » et « les zones suivantes » de la succession en considérant le sens de circulation du gaz à craquer dans la succession, la configuration de régénération ainsi décrite correspond donc à une régénération à co-courant du sens de circulation du gaz à craquer dans la succession) ;
- on procède, postérieurement à une phase d'élaboration dudit mélange de production, à une régénération des zones réactionnelles catalytiques de la succession, en balayant à l'aide d'un gaz de régénération indépendamment et simultanément chacune des zones réactionnelles catalytiques, chacune des zones réactionnelles qui précèdent la dernière zone de la succession étant régénérée de la façon suivante : on dispose, pour chacune desdites zones réactionnelles catalytiques qui précèdent la dernière zone de la succession, d'une conduite d'amenée d'un gaz de régénération, chacune des conduites d'amenée se raccordant à la canalisation utilisée pour extraire de la zone considérée à régénérer (et le diriger vers la zone suivante dans la succession) le mélange intermédiaire produit par la zone considérée (on définira la « dernière zone » et « les zones précédentes » de la succession en considérant le sens de circulation du gaz à craquer dans la succession, la configuration de régénération ainsi décrite correspond donc à une régénération à contre-courant du sens de circulation du gaz à craquer dans la succession) ;
- on effectue ladite phase de régénération de chaque zone réactionnelle de la façon suivante : le débit de gaz de régénération balayant une zone réactionnelle catalytique donnée est inférieur au débit de gaz de régénération balayant la zone qui précède cette zone donnée dans la succession ;
- on effectue ladite phase de régénération de chaque zone réactionnelle en deux étapes successives de balayage de chacune des zones réactionnelles à l'aide du gaz de régénération, le débit de gaz de régénération de la seconde étape étant supérieur au débit de gaz mis en oeuvre pour la première étape ;
- on procède, avant ladite phase de régénération de chaque zone réactionnelle, à une purge de chaque zone de la succession à l'aide d'un gaz inerte ;
- on procède, après ladite phase de régénération de chaque zone réactionnelle, et avant de redémarrer une phase de production, à une purge de chaque zone de la succession à l'aide d'un gaz inerte, puis à un balayage de chaque zone de la succession à l'aide d'un gaz d'hydrogène ;
- on effectue une trempe du gaz de régénération issu d'une des zones de la succession, avant son arrivée dans la zone suivante ;
- le gaz de régénération est un gaz oxydant choisi parmi l'air, l'oxygène, le CO₂, la vapeur d'eau et les mélanges de ces gaz ;
- chacune des zones réactionnelles catalytiques de la succession est maintenue à une température située dans l'intervalle allant de 500 à 1000°C ;
- chacune des zones réactionnelles catalytiques de la succession met en oeuvre un catalyseur à base de nickel, de cobalt, de chrome, de fer, de platine, de palladium, ou encore de rhodium ;
- chacune des zones réactionnelles catalytiques de la succession met en oeuvre un catalyseur à base de nickel supporté;
- le mélange gazeux de production, ainsi obtenu en sortie de la succession de zones réactionnelles catalytiques, subit un ou plusieurs post-traitements d'épuration, en vue d'accroître la teneur en hydrogène dans le mélange, par exemple par mise en oeuvre d'une technique d'adsorption préférentielle ;
- on dispose d'au moins deux successions de zones réactionnelles catalytiques, l'une des successions étant utilisée en phase de production pendant qu'une autre succession est en phase de régénération et ainsi de suite.

D'autres caractéristiques et avantages de l'invention ressortiront de la description suivante, donnée uniquement à titre d'exemple, et faite en référence aux dessins annexés sur lesquels :
- la figure 1 est une représentation schématique partielle d'une installation convenant pour la mise en oeuvre du procédé selon l'invention ;
- la figure 2 est une représentation schématique partielle d'une autre installation convenant pour la mise en oeuvre du procédé selon l'invention ;
- la figure 3 est une vue schématique partielle de détail d'une des zones réactionnelles de la figure 1, en particulier de sa canalisation d'évacuation du mélange intermédiaire de craquage qui y est produit et d'une conduite d'amenée du gaz de régénération se raccordant à cette canalisation selon l'invention.

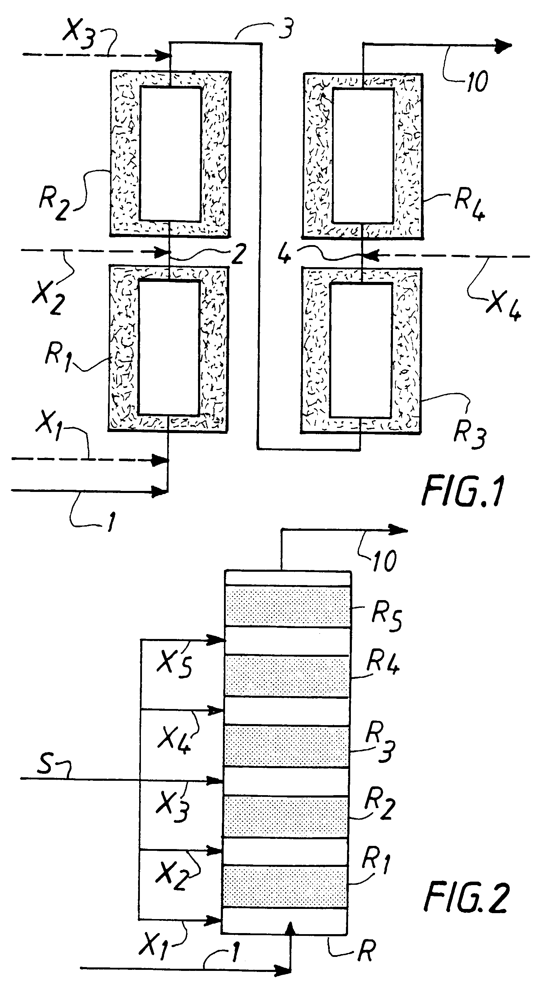

On reconnaît sur la figure 1 une succession de quatre zones réactionnelles catalytiques R₁, R₂, R₃ et R₄ consécutives, situées au sein de quatre réacteurs catalytiques différents.

On a symbolisé par la référence 1 l'arrivée d'un mélange gazeux initial qui comporte l'hydrocarbure (par exemple du gaz naturel) au niveau de la partie basse du réacteur R₁.

Comme on le voit très clairement sur la figure 1, le premier mélange gazeux intermédiaire résultant du craquage catalytique du mélange initial dans le réacteur R₁, est transmis (canalisation 2) dans la partie basse du réacteur R₂, où il subit lui-même un craquage catalytique, le mélange intermédiaire résultant étant alors transmis (canalisation 3) à la partie basse du réacteur R₃, et ainsi de suite.....

Le mélange gazeux final issu du réacteur R₄, c'est-à-dire le mélange gazeux de production requis qui comporte de l'hydrogène, est alors évacué de l'installation via la canalisation 10, et par exemple dirigé vers le point utilisateur, ou encore vers un ou plusieurs post-traitements d'épuration, en vue d'accroître la teneur en hydrogène dans le mélange, par exemple par mise en oeuvre d'une technique d'adsorption préférentielle. Il sera alors avantageux ici de recycler le mélange de désorption riche en hydrogène et en hydrocarbure à l'entrée du procédé (mélange initial).

Notamment en fonction de la nature des utilisations ultérieures du mélange de production, et en fonction du fait que l'on réalise ou non des étapes de post-traitements d'épuration du mélange, on pourra faire arriver le mélange initial dans la première zone de la succession à une pression voisine de la pression atmosphérique ou au contraire choisir d'arriver en pression, typiquement 5 à 15 voire 20 bars de pression initiale (ce qui peut par exemple favoriser la réalisation d'une étape ultérieure d'épuration par adsorption préférentielle qui nécessite typiquement de la pression).

Le mélange gazeux de production comporte donc typiquement de l'hydrogène, un résiduel d'hydrocarbure(s) non craqué, et le plus souvent de l'azote, de l'azote étant couramment présent dans les sources d'hydrocarbure disponibles.

On a fait figurer par les références X₁ à X₄ les arrivées de gaz de régénération (ici un gaz oxydant) dans l'installation, permettant de régénérer en parallèle, simultanément et indépendamment, chacune des zones réactionnelles catalytiques de l'installation : en l'occurrence la conduite d'amenée de gaz de régénération X₁ (de régénération de R₁) se connectant à la partie basse du réacteur R₁, la conduite X₂ d'amenée de gaz oxydant de régénération (du réacteur R₂) se connectant à la conduite 2 de transmission du premier mélange intermédiaire entre le réacteur R₁ et le réacteur R₂, et ainsi de suite.....

Comme il apparaîtra clairement à l'homme du métier à la lecture de cette figure, de telles arrivées Xᵢ de gaz de régénération, dans la partie basse du premier réacteur de la succession, et entre deux zones réactionnelles pour ce qui est des réacteurs suivants, permettent, d'une part, de régénérer le réacteur suivant le point de connexion d'une conduite d'amenée donnée, mais également de balayer les canalisations en évitant tout dépôt de suie.

Comme on l'aura compris également à la lecture de ce qui précède, les conduites d'amenée Xᵢ servent non seulement à faire parvenir le gaz oxydant de régénération, mais peuvent également servir si besoin est, selon le mode de réalisation de l'invention choisi, à faire parvenir un gaz inerte de purge en préalable à ladite phase de régénération, ou encore à faire parvenir un gaz inerte de purge et un gaz de balayage d'hydrogène, postérieurement à ladite phase de régénération.

Si la figure 1 illustre un mode de réalisation de l'invention où la régénération est effectuée à co-courant du sens de circulation du gaz à craquer dans la succession, on pourrait envisager, comme déjà signalé plus haut, et cela sans sortir du cadre de la présente invention, un régénération à contre courant du sens de circulation du gaz à craquer dans la succession en modifiant légèrement l'installation représentée figure 1 :
- suppression de l'arrivée X1 ;
- l'arrivée X2 sert à régénérer R1, l'arrivée X3 sert à régénérer R2, l'arrivée X4 sert à régénérer R3 ;
- il conviendrait alors d'ajouter une arrivée X5 de gaz de régénération du réacteur R4, se raccordant en aval de ce réacteur au niveau de la canalisation 10.

Conformément à l'invention, les quatre zones réactionnelles de la figure 1 sont soumises à un gradient de température croissant (c'est-à-dire des conditions où la température de R₁ est inférieure à la température de R₂ qui est elle même inférieure à température de R₃, etc..), et/ou présentent un gradient croissant de teneur en métal dans le catalyseur (teneur en métal de R₁ inférieure à teneur en métal de R₂, qui est elle même inférieure à la teneur en métal de R₃, etc ...).

A titre illustratif, on pourra utiliser l'installation de la figure 1 dans les conditions suivantes, chaque zone réactionnelle catalytique mettant en oeuvre un catalyseur de nickel sur silice (surface spécifique voisine de 500 m²/g, taille de particules inférieure à 800 µm et typiquement comprise entre 100 et 600 µm, porosité de l'ordre de 50 à 100 Å):
- réacteur R₁ : maintenu à une température de 600°C à 700°C, la teneur en nickel du catalyseur étant voisine de 10 % ;
- réacteur R₂ : maintenu à une température de 700 à 800°C, la teneur en nickel du catalyseur étant voisine de 15 % ;
- réacteur R₃ : maintenu à une température de 800 à 875°C, la teneur en nickel du catalyseur étant voisine de 20 %
- réacteur R₄ : maintenu à une température de 875 à 950°C, la teneur en nickel du catalyseur étant voisine de 25 %.

De telles caractéristiques de catalyseur (taille, porosité..) favorisent l'obtention d'un lit fluidisé (catalyseur en suspension dans le gaz, uniformité de répartition dans l'espace, meilleure uniformité de température dans le réacteur).

A titre illustratif, l'utilisation d'une telle installation pour craquer du méthane donne les compositions suivantes de mélanges en sortie de chaque réacteur :
- en sortie de premier réacteur R1 : environ 51 % H₂ et 49% de CH₄ ;
- en sortie de second réacteur : environ 76 % H₂ et 24% de CH₄ ;
- en sortie de 3e réacteur : environ 89 % H₂ et 11% de CH₄ ;
- en sortie de 4e réacteur R4 : environ 98 % H₂ et 2% de CH₄.

La figure 2 présente un autre mode de réalisation de l'invention où cinq zones réactionnelles catalytiques R₁ à R₅ sont rassemblées et consécutives au sein d'un même réacteur.

Ici encore, la référence 1 désigne l'arrivée de mélange gazeux initial à craquer dans la partie basse du réacteur, c'est-à-dire dans la partie basse de la zone réactionnelle R₁, tandis que la référence 10 représente l'évacuation du mélange gazeux de production final obtenu dans la partie haute du réacteur, c'est-à-dire dans la partie haute de la dernière zone réactionnelle R₅ de la succession.

Ici encore, à partir ici d'une même source de gaz de régénération S (mais comme déjà signalé on pourrait également utiliser une multiplicité de sources de gaz de régénération au lieu de cette source unique S), on dispose de moyens (X₁ à X₅) permettant de balayer et de régénérer indépendamment et simultanément chacune des zones réactionnelles catalytiques de la succession.

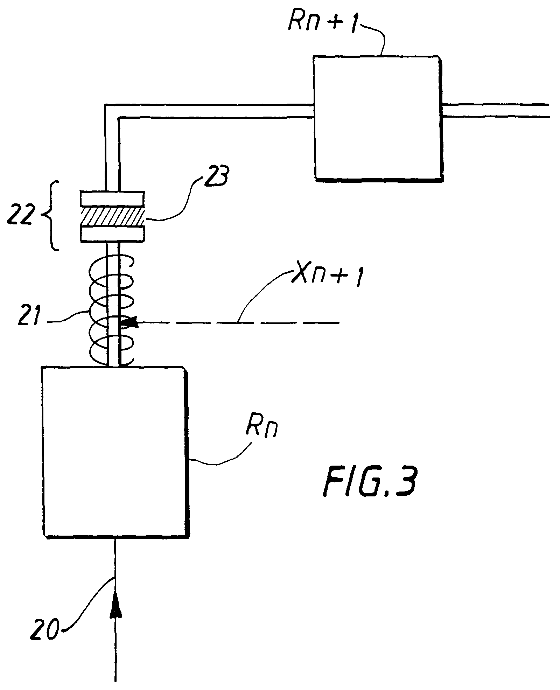

La figure 3 représente pour sa part une vue de détail de la partie intermédiaire entre deux réacteurs successifs de la figure 1 (typiquement entre les réacteurs R₁ et R₂ ou encore entre les réacteurs R₃ et R₄).

On reconnaît alors la présence entre le réacteur Rₙ et le réacteur Rₙ₊₁ d'une canalisation permettant de transférer au réacteur Rₙ₊₁ le mélange gazeux intermédiaire résultant du craquage effectué dans le réacteur Rₙ, canalisation à laquelle vient se raccorder une conduite d'amenée Xₙ₊₁ d'un mélange gazeux de régénération du réacteur Rₙ₊₁ .

Cette vue de détail permet de visualiser un mode de réalisation avantageux de l'invention selon lequel on dispose sur une partie de la canalisation en question d'un système 21 de trempe (ici un serpentin où circule par exemple de l'eau) du mélange gazeux de régénération issu du réacteur Rₙ , trempe effectuée non seulement pour diminuer la température du gaz de régénération issu du réacteur considéré (rappelons que la régénération est très exothermique) mais également pour figer la composition de ce mélange (qui comporte du CO et du CO₂) et éviter la formation de toute particule (notamment de suie). Sur cette portion de la canalisation trempée se raccorde d'ailleurs la conduite Xₙ₊₁ d'amenée de gaz de régénération.

Ce mode de réalisation comporte également une bride 22 munie d'un moyen 23 de rétention des poudres de catalyseur qui seraient le cas échéant entraînées vers le haut par du gaz issu du réacteur Rᵢ. Le moyen 23 pourra être constitué d'un filtre, d'un poreux, d'un fritté...

Comme déjà signalé, si la figure 1 illustre un configuration de régénération à co-courant du sens de circulation du gaz à craquer dans la succession , une configuration de régénération à contre-courant est également envisageable (l'arrivée X4 servant à régénérer le réacteur R3 etc...). Tout comme précédemment, dans un tel cas de régénération à contre-courant, on disposera également de façon avantageuse un système de trempe du mélange gazeux de régénération issu d'un réacteur Rₙ donné, similaire au système décrit dans le cadre de la figure 3.

En examinant les modes de réalisation illustrés en figures 1 et 2, on conçoit que, notamment pour des raisons pratiques d'entretien et de changement de matériaux, un mode de réalisation tel que celui illustré dans le cadre de la figure 1 où toutes les zones réactionnelles sont disposées dans des réacteurs séparés et consécutifs, soit préféré à un mode de réalisation où toutes les zones réactionnelles sont toutes rassemblées au sein d'un même réacteur comme c'est le cas du mode illustré dans le cadre de la figure 2.

Si l'on revient justement au mode de réalisation illustré dans le cadre de la figure 1, avec son gradient de température et/ou de teneur en métal dans le catalyseur, on peut également énoncer les caractéristiques et avantages suivants :
a) l'utilisation d'une telle succession de réacteurs donne lieu à une décroissance de la quantité de carbone déposée d'une zone à l'autre de la succession : davantage de carbone déposé dans la zone R₁ et moins de carbone déposé dans la dernière zone R₄.
   En effet, on sait que le taux de conversion de la réaction dépend de la température mais également de la teneur en hydrocarbure présente dans le mélange entrant. Ici, du fait de la succession adoptée et donc des craquage successifs, cette teneur en hydrocarbure décroît d'une zone à l'autre.
   Mais par ailleurs l'application selon l'invention d'un gradient de température croissant dans la succession, et/ou d'un gradient croissant de teneur en métal dans le catalyseur, permet de contrôler précisément la quantité de carbone déposée dans chaque zone .
b) la régénération indépendante et simultanée de chacune des zone permet d'obtenir un temps plus court de régénération, par rapport au cas d'une structure de monoréacteur où le carbone se dépose immédiatement en début de zone, entraînant un risque important de bouchage, et une donc longue procédure ensuite de régénération.
c) On sait que la régénération de ces zones réactionnelles à l'aide d'un gaz oxydant tel que l'air se trouve être une réaction exothermique, et que l'accroissement de température en résultant (et ainsi le cyclage thermique) peut mettre en cause la tenue des matériaux . Il est en pratique préférable de demeurer durant la régénération à une température ne dépassant pas 1000 °C dans chaque zone.
   Selon le mode de réalisation de l'invention mettant en oeuvre un gradient de température, le dépôt maximum de carbone se fait dans une zone à plus faible température de catalyseur, alors que le dépôt minimum de carbone se fait dans la dernière zone de la succession qui est maintenue à la plus haute température. On constate alors que selon l'invention, la régénération se déroulera d'autant mieux et plus sûrement à une température n'excédant pas 1000°C dans toutes les zones de la succession.
d) comme décrit plus haut dans la présente demande, il est alors tout particulièrement avantageux d'adapter à chaque zone le débit nécessaire de gaz de régénération, en l'occurrence par le fait que l'on obtient des taux de carbone décroissants d'une zone à l'autre de la succession, on pourra avantageusement adopter un débit de gaz de régénération décroissant de la première zone R₁ de la succession à la dernière zone R₄ de la succession .
e) on a noté que selon un des modes avantageux de mise en oeuvre de l'invention, on effectue la phase de régénération de chaque zone réactionnelle en deux étapes successives de balayage, le débit de gaz de régénération de la seconde étape étant supérieur au débit de gaz de régénération mis en oeuvre pour la première étape. La première étape de balayage à plus faible débit est tout particulièrement avantageuse afin de diminuer dans un premier temps la température du catalyseur .
f) de même, on a mentionné l'avantage de procéder, avant ladite phase de régénération de chaque zone réactionnelle, à une purge de chaque zone de la succession à l'aide d'un gaz inerte. Une telle purge permet d'une part d'effectuer un prérefroidissement de la zone, et d'autre part d'éliminer d'éventuelles traces résiduelles d'hydrogène, et donc d'éviter la formation de vapeur d'eau durant la régénération ultérieure ;
g) selon un des aspects de l'invention, après une phase de régénération de chaque zone réactionnelle, et avant de redémarrer une phase de production, on peut procéder à une purge de chaque zone de la succession à l'aide d'un gaz inerte, suivie d'un balayage de chaque zone de la succession à l'aide d'un gaz d'hydrogène. La purge inerte permet en effet d'éliminer d'éventuelles traces d'oxygène, de vapeur d'eau, ou encore d'oxydes de carbone, avant le balayage à l'hydrogène qui va suivre, dont le rôle est, selon les spécifications requises par le site utilisateur pour le mélange de production, de limiter la présence d'azote dans ce mélange.

## Revendications

1. Procédé d'élaboration d'un mélange gazeux de production comportant de l'hydrogène, par décomposition thermocatalytique d'un mélange initial (1) qui comporte au moins un hydrocarbure, la décomposition étant effectuée sur un catalyseur étant apte, au contact de l'hydrocarbure, à former des nanotubes de carbone, caractérisé en ce que :
- on dispose d'au moins une succession qui comporte au moins une première et une seconde zones réactionnelles catalytiques (R1, R2..), séparées au sein d'au moins deux réacteurs différents consécutifs, ou bien consécutives au sein d'un même réacteur (R);
- lesdites au moins une première et une seconde zones réactionnelles catalytiques consécutives, sont soumises à un gradient de température croissant, et/ou présentent un gradient croissant de teneur en métal dans le catalyseur;
- on fait arriver le mélange initial dans ladite première zone réactionnelle catalytique, afin de former un premier mélange intermédiaire, que l'on dirige (2) vers ladite seconde zone réactionnelle catalytique de la succession, pour y former ledit mélange de production requis.

2. Procédé selon la revendication 1, caractérisé en ce que la succession comprend au moins deux zones réactionnelles catalytiques, chaque zone étant située dans un réacteur séparé.

3. Procédé selon la revendication 1, caractérisé en ce que la succession comprend au moins deux zones réactionnelles catalytiques, positionnées de façon consécutives dans un même réacteur (R).

4. Procédé selon la revendication 2 ou 3, caractérisé en ce que l'on procède, postérieurement à une phase d'élaboration dudit mélange de production, à une phase de régénération des zones réactionnelles catalytiques de la succession, de la façon suivante : on dispose de moyens permettant de balayer, à l'aide d'un gaz de régénération, indépendamment et simultanément chacune des zones réactionnelles catalytiques de la succession.

5. Procédé selon la revendication 2 ou 3, caractérisé en ce que l'on procède, postérieurement à une phase d'élaboration dudit mélange de production, à une phase de régénération des zones réactionnelles catalytiques de la succession, de la façon suivante : on dispose de moyens permettant de balayer indépendamment et simultanément à l'aide d'un gaz de régénération oxydant chacune des zones réactionnelles catalytiques de la succession, le gaz de régénération utilisé étant différent d'une zone à l'autre, par le fait qu'il possède une teneur résiduelle en oxygène différente.

6. Procédé selon la revendication 2, caractérisé en ce que l'on procède, postérieurement à une phase d'élaboration dudit mélange de production, à une régénération des zones réactionnelles catalytiques de la succession, en effectuant un balayage, à l'aide d'un gaz de régénération, de chacune des zones réactionnelles catalytiques indépendamment et simultanément, chacune des zones réactionnelles suivant la première zone de la succession étant régénérée de la manière suivante : on dispose pour chacune desdites zones réactionnelles catalytiques qui suivent la première zone de la succession d'une conduite d'amenée d'un gaz de régénération, chaque conduite d'amenée se raccordant à la canalisation utilisée pour diriger, vers la zone considérée, le mélange intermédiaire produit par la zone la précédant dans la succession.

7. Procédé selon la revendication 2, caractérisé en ce que l'on procède, postérieurement à une phase d'élaboration dudit mélange de production, à une régénération des zones réactionnelles catalytiques de la succession, en balayant à l'aide d'un gaz de régénération indépendamment et simultanément chacune des zones réactionnelles catalytiques, chacune des zones réactionnelles qui précèdent la dernière zone de la succession étant régénérée de la façon suivante : on dispose, pour chacune desdites zones réactionnelles catalytiques qui précèdent la dernière zone de la succession, d'une conduite d'amenée d'un gaz de régénération, chacune des conduites d'amenée se raccordant à la canalisation utilisée pour extraire de la zone considérée à régénérer le mélange intermédiaire produit par cette zone considérée .

8. Procédé selon l'une des revendications 4 à 6, caractérisé en ce que l'on effectue ladite phase de régénération de la façon suivante : le débit de gaz de régénération balayant une zone réactionnelle catalytique donnée est inférieur au débit de gaz de régénération balayant la zone qui précède cette zone donnée dans la succession.

9. Procédé selon l'une des revendications 4 à 8, caractérisé en ce que l'on effectue ladite phase de régénération de chaque zone réactionnelle catalytique en deux étapes successives de balayage de chacune des zones réactionnelles à l'aide du gaz de régénération, le débit de gaz de la seconde étape étant supérieur au débit de gaz mis en oeuvre pour la première étape.

10. Procédé selon l'une des revendications 4 à 9, caractérisé en ce que l'on procède, avant ladite phase de régénération, à une purge de chaque zone de la succession à l'aide d'un gaz inerte.

11. Procédé selon l'une des revendications 4 à 10, caractérisé en ce que l'on procède, après ladite phase de régénération de la succession, et avant de redémarrer une phase de production, à une purge de chaque zone de la succession à l'aide d'un gaz inerte, puis à un balayage de chaque zone de la succession à l'aide d'un gaz d'hydrogène.

12. Procédé selon l'une des revendications 4 à 11, caractérisé en ce que l'on effectue une trempe du gaz de régénération issu d'une des zones de la succession, avant son arrivée dans la zone suivante.

13. Procédé selon l'une des revendications 4 à 12, caractérisé en ce que le gaz de régénération est un gaz oxydant choisi parmi l'air, l'oxygène, le CO₂, la vapeur d'eau ou leurs mélanges.

14. Procédé selon l'une des revendications précédentes, caractérisé en ce que chacune des zones de la succession est maintenue à une température comprise dans l'intervalle allant de 500 à 1000°C.

15. Procédé selon l'une des revendications précédentes, caractérisé en ce que les zones réactionnelles catalytiques de la succession utilisent un catalyseur à base de nickel, cobalt, chrome, fer, platine, palladium, ou encore rhodium.

16. Procédé selon la revendication 15, caractérisé en ce que le catalyseur est à base de nickel supporté.

17. Procédé selon l'une des revendications précédentes, caractérisé en ce que le mélange gazeux de production ainsi obtenu en sortie de la succession de zones réactionnelles catalytiques subit un ou plusieurs post-traitements d'épuration, en vue d'accroître la teneur en hydrogène dans le mélange.

18. Procédé selon l'une des revendications précédentes, caractérisé en ce que on dispose d'au moins deux successions de zones réactionnelles catalytiques, l'une des succession étant utilisée en phase de production pendant qu'une autre succession est soumise à une phase de régénération.

19. Procédé selon l'une des revendications précédentes, caractérisé en ce que l'on fait arriver le mélange initial dans ladite première zone réactionnelle catalytique sous une pression comprise entre 5 et 20 bars.

20. Installation d'élaboration d'un mélange gazeux de production comportant de l'hydrogène, par décomposition thermocatalytique d'un mélange initial (1) qui comporte au moins un hydrocarbure, le catalyseur utilisé étant apte, au contact de l'hydrocarbure, à former des nanotubes de carbone, caractérisée en ce qu'elle comprend :
- au moins une succession qui comporte au moins une première et une seconde zones réactionnelles catalytiques (R1, R2..), séparées au sein d'au moins deux réacteurs différents consécutifs, ou bien consécutives au sein d'un même réacteur (R);
- des moyens (1) permettant de faire arriver un mélange initial à traiter, dans ladite première zone réactionnelle catalytique, afin de former un premier mélange intermédiaire, et de diriger (2, 3, 4) le premier mélange intermédiaire ainsi formé vers ladite seconde zone réactionnelle catalytique de la succession, pour y former ledit mélange de production requis ;
et caractérisée en ce qu'elle adopte l'une ou plusieurs des configurations suivantes :
i) lesdites zones réactionnelles catalytiques consécutives présentent un gradient croissant de teneur en métal dans le catalyseur ;
j) l'installation comprend des moyens pour soumettre lesdites zones réactionnelles catalytiques consécutives à un gradient de température croissant.

21. Installation selon la revendication 20, caractérisée en ce que ladite au moins une succession comprend au moins deux zones réactionnelles catalytiques, chaque zone étant située dans un réacteur séparé.

22. Installation selon la revendication 20, caractérisée en ce que la dite au moins une succession comprend au moins deux zones réactionnelles catalytiques, positionnées de façon consécutives dans un même réacteur (R).

23. Installation selon la revendication 21 ou 22, caractérisée en ce qu'elle comporte des moyens de régénération (S, Xᵢ) permettant d'effectuer, postérieurement à une phase d'élaboration dudit mélange de production, une phase de régénération des zones réactionnelles catalytiques de la succession, en balayant, à l'aide d'un gaz de régénération, indépendamment et simultanément chacune des zones réactionnelles catalytiques de la succession.

24. Installation selon la revendication 21 ou 22, caractérisée en ce qu'elle comporte des moyens de régénération (S, Xᵢ) permettant d'effectuer, postérieurement à une phase d'élaboration dudit mélange de production, une phase de régénération des zones réactionnelles catalytiques de la succession, et en ce que les dits moyens de régénération permettent de balayer indépendamment et simultanément à l'aide d'un gaz de régénération oxydant chacune des zones réactionnelles catalytiques de la succession, le gaz de régénération utilisé étant différent d'une zone à l'autre, par le fait qu'il possède une teneur résiduelle en oxygène différente.

25. Installation selon la revendication 21, caractérisée en ce qu'elle comporte des moyens de régénération permettant d'effectuer, postérieurement à une phase d'élaboration dudit mélange de production, une phase de régénération des zones réactionnelles catalytiques de la succession, en balayant, à l'aide d'un gaz de régénération, indépendamment et simultanément chacune des zones réactionnelles catalytiques de la succession, et en ce que lesdits moyens de régénération comprennent, pour chacune desdites zones réactionnelles catalytiques qui suivent la première zone de la succession, une conduite d'amenée d'un gaz de régénération, chaque conduite d'amenée se raccordant à la canalisation utilisée pour diriger, vers la zone réactionnelle considérée, le mélange intermédiaire produit par la zone la précédant dans la succession.

26. Installation selon la revendication 21, caractérisée en ce qu'elle comporte des moyens de régénération permettant d'effectuer, postérieurement à une phase d'élaboration dudit mélange de production, une phase de régénération des zones réactionnelles catalytiques de la succession, en balayant, à l'aide d'un gaz de régénération, indépendamment et simultanément chacune des zones réactionnelles catalytiques de la succession, et en ce que lesdits moyens de régénération comprennent, pour chacune desdites zones réactionnelles catalytiques qui précèdent la dernière zone de la succession, une conduite d'amenée d'un gaz de régénération, chacune des conduites d'amenée se raccordant à la canalisation utilisée pour extraire de la zone considérée à régénérer le mélange intermédiaire produit par cette zone considérée.

27. Installation selon l'une des revendications 23 à 26, caractérisée en ce que les dits moyens de régénération comportent au moins une source (S) de gaz de régénération qui est une source d'un gaz oxydant choisi parmi l'air, l'oxygène, le CO₂, la vapeur d'eau ou leurs mélanges.

28. Installation selon l'une des revendications 23 à 27, caractérisée en ce qu'elle comporte des moyens (21) de trempe du gaz de régénération issu d'une des zones de la succession, avant son arrivée dans la zone suivante.

29. Installation selon l'une des revendications 20 à 28, caractérisée en ce que les zones réactionnelles catalytiques de la succession comportent un catalyseur à base de nickel, cobalt, chrome, fer, platine, palladium, ou encore rhodium.

30. Installation selon la revendication 29, caractérisée en ce que les zones réactionnelles catalytiques de la succession comportent un catalyseur à base de nickel supporté.

31. Installation selon l'une des revendications 20 à 30, caractérisée en ce qu'elle comporte des moyens permettant d'effectuer un ou plusieurs post-traitements d'épuration du mélange gazeux de production obtenu en sortie de la succession de zones réactionnelles catalytiques.

32. Installation selon l'une des revendications 20 à 31, caractérisée en ce qu'elle comporte au moins deux successions de zones réactionnelles catalytiques.
